# EUROPÄISCHE PATENTANMELDUNG

(11) **EP 3 933 595 A1**
(43) Veröffentlichungstag der Anmeldung: **05.01.2022**
(21) Anmeldenummer: 20183413.2
(22) Anmeldetag: 01.07.2020
(51) Int. Cl.: G06F 11/30, G06F 11/14, G06K 9/62

(54) **AUTOMATISIERTE ÜBERWACHUNG KÜNSTLICHER INTELLIGENZ**

(71) Anmelder: Siemens Aktiengesellschaft, 80333 München (DE)
(72) Erfinder: Höfig, Kai, 83101 Rohrdorf (DE)

(57) **Zusammenfassung**

Die Erfindung gibt ein automatisiertes Verfahren zur Erzeugung eines Monitormodells eines Monitors zur Überwachung eines Arbeitsmodells einer künstlichen Intelligenz,
- wobei durch das Arbeitsmodell eine Klassifizierung von Eingabedaten durchführt wird und
- wobei mit einer repräsentativen Datenmenge des Arbeitsmodells das Monitormodell trainiert wird

Die Erfindung gibt auch eine zugehörige Vorrichtung, ein zugehöriges Computerprogrammprodukt und ein zugehöriges computerlesbares Medium an.

## Beschreibung

### GEBIET DER ERFINDUNG

Die Erfindung betrifft ein automatisiertes Verfahren und eine Vorrichtung zur Erzeugung eines Monitormodells eines Monitors zur Überwachung eines Arbeitsmodells einer künstlichen Intelligenz. Die Erfindung betrifft auch ein zugehöriges Computerprogrammprodukt und computerlesbares Medium.

### HINTERGRUND DER ERFINDUNG

Neuronale Netze sind eine populäre Technik aus dem Bereich der künstlichen Intelligenz, um insbesondere Bilddaten effizient zu verarbeiten und mit Hilfe von Trainingsdaten bestimmte Dinge zur Laufzeit eines Systems zu erkennen. Zunehmens stärker wird der Wunsch, diese Technik auch in sicherheitskritischen Systemen einzusetzen. Im Gegensatz zu klassischen, regelbasierten Algorithmen, entspricht die Ausgabe eines neuronalen Netzes nicht einer klassischen und präzise formulierten Anforderung, die von einem Entwickler in Software implementiert wurde, sondern wurde durch zur Design-Zeit vorgehaltenen Testdaten von einem Computer erlernt.

So wie bei klassischen Algorithmen die Lösung eines Programms den Anforderungen entsprechen soll, soll bei einem neuronalen Netz oder allgemein bei Algorithmen der künstlichen Intelligenz, das Ergebnis den Trainingsdaten entsprechen. Streng genommen entsprechen die Trainingsdaten den klassischen Anforderungen. Eine populäre Technik, um die Grenzen komplexer Algorithmen während der Laufzeit zu überprüfen und dafür zu sorgen, dass die Parameter zur Laufzeit den in den Anforderungen definierten Betriebsparametern entsprechen, ist der Monitor.

Ein Monitor ist ein technisches Element, häufig ein eingebettetes System, welches mit Hilfe sehr einfacher regelbasierter Algorithmen bestimmte Laufzeitparameter eines komplexen Systems währen der Laufzeit überprüft. Ein Beispiel hierfür ist ein eingebettetes System, das überprüft, ob ein anderes System noch aktiv ist, oder bereits abgestürzt ist.

Ein Monitor, der auf ähnliche Weise für neuronale Netze oder Algorithmen der künstlichen Intelligenz im Allgemeinen arbeitet, überwacht also die Einhaltung der Trainingsdaten.

Bisher wurde eine klassische Monitortechnologie auch für die Verwendung in neuronalen Netzen oder anderen Algorithmen der künstlichen Intelligenz vorgeschlagen. Ähnlich wie bei klassischen Algorithmen lassen sich auf die Laufzeitparameter auf die Einhaltung bestimmter Grenzen überprüfen, die von einem KI-Algorithmus berechnet wurden. Allerdings ist dieses Vorgehen nicht sonderlich hilfreich, da ein falsch erkanntes Straßenschild und die entsprechende Reaktion eines Systems durch einen solchen Ansatz kaum zu unterscheiden ist, wie die Reaktion auf ein richtig erkanntes Straßenschild.

Daher wurde bisher versucht, ein besonderes Augenmerk auf qualitativ hochwertige Trainingsdaten zu legen. Andere Ansätze beschäftigen sich mit der formalen Verifikation von KI-basierten Algorithmen und wieder andere Ansätze versuchen Manipulationen an Bilddaten während der Laufzeit zu detektieren (engl. adversarial attacks).

Einen Monitor zu entwickeln, der überprüft, ob die Entscheidung eines neuronalen Netzes auf den Trainingsdaten beruht, ist außerdem in Runtime Monitoring Neuron Activation Patterns by Chih-Hong Cheng, Georg Nührenberg, Hirotoshi Yasuoka (https://arxiv.org/abs/1809.06573) zu finden. Bei dieser Technik werden allerdings Aktivierungsmuster aus einem neuronalen Netz bei der erneut durchgeführten Analyse der Trainingsdaten gesammelt und dann während der Laufzeit mittels Hamming Distanz der während der Laufzeit auftretenden Muster Abweichungen registriert. Tritt eine zu hohe Abweichung auf, meldet der Monitor dem System einen detektierten Fehler.

Problematisch bei dieser Technik ist vor allem die schlechte Skalierbarkeit. Die Autoren geben eine zurzeit technische Machbarkeit für ein solch Hamming -Distanz-basiertes Verfahren mit binären Entscheidungsbäumen von 200 Neuronen an. Im Bereich Deep Learning, wo vor allem Bilddaten verarbeitet werden, wird die Anzahl der Neuronen schnell überschritten. AlexNet zum Beispiel hat rund 650.000 Neuronen. Hinzu kommt, dass leichte Abweichungen von detektierten Pattern zu gespeicherten Pattern zulässig sind, aber dass die Justierung wieder eine manuelle Aufgabe darstellt.

### ZUSAMMENFASSUNG DER ERFINDUNG

Es ist Aufgabe der Erfindung, eine Lösung für eine verbesserte Überwachung der Algorithmen der künstlichen Intelligenz, wie beispielsweise Arbeitsmodelle der künstlichen neuronalen Netze, anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

In einem Aspekt der Erfindung wird vorgeschlagen, einen Monitor für künstliche neuronale Netze oder andere Algorithmen der künstlichen Intelligenz vollautomatisch zu generieren. Bei einer derartigen Technik wird, anders als bei den zuvor genannten Verfahren, die Menge der gültigen Aktivierungsmuster oder Aktivierungspfade nicht mehr klassisch gespeichert und manuell justiert, sondern automatisiert erlernt.

Ein erstes neuronales Netz erzeugt mittels eines Modells aus einer Menge von Eingabewerten eine Ausgabe, was als Arbeitsmodell bezeichnet wird. Zusätzlich ist ein zweites neuronales Netz eingerichtet, das Monitormodell, welches als Eingabewerte die Ausgabe der Aktivierungsfunktionen aller Neuronen des Arbeitsmodells des ersten neuronalen Netzes bekommt. Alternativ dazu kann auch jede andere repräsentative Datenmenge eines KI-basierten Algorithmus gewählt werden, welche die Klassifizierung eines gegebenen Datensatzes darstellt.

Das Monitormodell wird dadurch trainiert, dass das Arbeitsmodell seine Trainingsdaten, nachdem es fertig trainiert wurde, abermals zur Analyse durchläuft. Während diesem Durchlauf, wird das Monitormodell trainiert und erlernt auf diese Weise alle "Gutmuster", die das Arbeitsmodell erreichen kann. Toleranzen für leichte Abweichungen ergeben sich bei diesem Verfahren automatisch, da das trainierte zweite neuronale Netz die Varianz der Aktivierungsmuster mit erlernt.

Die Erfindung beansprucht ein automatisiertes bzw. computerimplementiertes Verfahren zur Erzeugung eines Monitormodells eines Monitors zur Überwachung eines Arbeitsmodells einer künstlichen Intelligenz,
- wobei durch das Arbeitsmodell eine Klassifizierung von Eingabedaten durchführt wird und
- wobei mit einer repräsentativen Datenmenge des Arbeitsmodells das Monitormodell trainiert wird.

Das Monitormodell kann als "Über-Ich" bzw. als "Gewissen" des Arbeitsmodells angesehen werden. Die Erfindung bietet den Vorteil, dass Fehler während des Betriebs der künstlichen Intelligenz erkannt werden können.

In einer Weiterbildung kann der Monitor ein künstliches erstes neuronales Netz aufweisen und die repräsentative Datenmenge kann als Eingabe für das erste neuronale Netz verwendet werden.

In einer weiteren Ausführungsform kann die künstliche Intelligenz ein künstliches zweites neuronales Netz aufweisen, wobei die repräsentative Datenmenge durch die Ausgabe der Aktivierungsfunktionen der Neuronen des zweiten neuronalen Netzes gebildet wird.

In einer weiteren Ausprägung kann das Monitormodell dadurch trainiert werden, dass in das mit Trainingsdaten fertig trainierte Arbeitsmodell die Trainingsdaten abermals zur Analyse eingegeben werden und das Arbeitsmodell durchlaufen wird, wobei das Monitormodell eine Menge der gültigen Aktivierungsmuster und/oder Aktivierungspfade, die das Arbeitsmodell erreichen kann, erlernt.

Somit lernt das Monitormodell alle "Gutmuster des Arbeitsmodells.

Die Erfindung beansprucht auch eine Vorrichtung, aufweisend eine künstliche Intelligenz und einen Monitor zur Überwachung eines Arbeitsmodells der künstlichen Intelligenz,
- wobei die künstliche Intelligenz eingerichtet ist, durch das Arbeitsmodell eine Klassifizierung von Eingabedaten durchzuführen und
- wobei mit einer repräsentativen Datenmenge des Arbeitsmodells ein Monitormodell des Monitors trainiert wird.

Die Vorrichtung kann beispielsweise ein Computer sein.

In einer Weiterbildung kann der Monitor ein künstliches erstes neuronales Netz aufweisen und die Eingabe für das erste neuronale Netz kann durch die repräsentative Datenmenge gebildet werden.

In einer weiteren Ausgestaltung kann die künstliche Intelligenz ein künstliches zweites neuronales Netz aufweisen, wobei die repräsentative Datenmenge durch die Ausgabe der Aktivierungsfunktionen der Neuronen des zweiten neuronalen Netzes gebildet ist.

In einer Weiterbildung kann die Vorrichtung eingerichtet sein, das Monitormodell dadurch zu trainieren, dass in das mit Trainingsdaten fertig trainierte Arbeitsmodell die Trainingsdaten abermals zur Analyse eingegeben werden und das Arbeitsmodell durchläuft, wobei das Monitormodell eine Menge der gültigen Aktivierungsmuster und/oder Aktivierungspfade, die das Arbeitsmodell erreichen kann, erlernt.

Die Erfindung beansprucht außerdem ein Computerprogrammprodukt, umfassend ein Computerprogramm, wobei das Computerprogramm in eine Speichereinrichtung einer Einrichtung ladbar ist, wobei mit dem Computerprogramm die Schritte eines erfindungsgemäßen Verfahrens ausgeführt werden, wenn das Computerprogramm auf der Einrichtung ausgeführt wird.

Die Erfindung beansprucht schließlich ein computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines erfindungsgemäßen Verfahrens ausgeführt werden, wenn das Computerprogramm auf der Einrichtung ausgeführt wird.

Weitere Besonderheiten und Vorteile der Erfindung werden aus den nachfolgenden Erläuterungen eines Ausführungsbeispiels anhand zweier schematischer Zeichnungen ersichtlich.

### KURZE BESCHREIBUNG DER ZEICHNUNG

Es zeigen:
FIG. 1 ein Blockschaltbild eines Ausführungsbeispiels mit neuronalen Netzen und
FIG. 2 ein Ablaufdiagramm eines automatisierten Verfahrens zur Erzeugung eines Monitormodells eines Monitors zur Überwachung eines Arbeitsmodells einer künstlichen Intelligenz.

### DETAILLIERTE BESCHREIBUNG DER ERFINDUNG

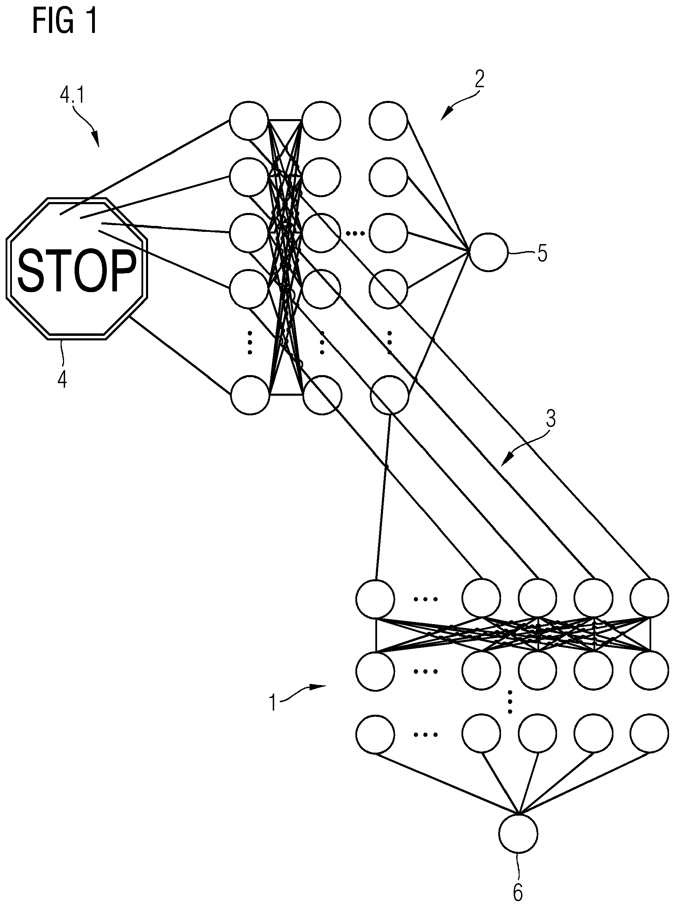

FIG. 1 zeigt das Blockschaltbild eines Ausführungsbeispiels mit neuronalen Netzen und Bilderkennung. Ein zweites neuronales Netz 2 wird mit Hilfe von beispielsweise 1.000 Bildern von Stopp-Verkehrsschildern 4 trainiert. Als Eingabevektor wird dabei typischerweise eine Menge von Bildpunkten 4.1 angenommen. Als Ausgabe 5 des zweiten neuronalen Netzes 2 wird eine Wahrscheinlichkeit als Zahl zwischen 1 und 0 erzeugt, die angibt, wie hoch die Wahrscheinlichkeit angenommen wird, dass ein bestimmtes Bild (Menge von Bildpunkten 4.1) ein Stopp-Verkehrsschild 4 darstellt.

Der Trainingssatz von 1.000 Bildern wird nun verwendet, um das zweite neuronale Netz 2, also dessen Arbeitsmodell, zu trainieren. Nachdem das Arbeitsmodell fertig trainiert ist, wird das Monitormodell des ersten neuronalen Netzes 1, also der Monitor, trainiert. Dabei werden die 1.000 Bilder 4.1 oder ein repräsentativer Teil davon, wieder vom Arbeitsmodell analysiert, und das Monitormodell lernt die Aktivierungsmuster des zweiten neuronalen Netzes 2 (= Ausgabe der Aktivierungsfunktionen der Neuronen des zweiten neuronalen Netzes 2) .

Nachdem das Arbeitsmodell und das Monitormodell trainiert wurden, kann das System, aufweisend das erste neuronale Netz 1 und das zweite neuronale Netz 2, zur Erkennung von Stoppschildern 4 verwendet werden. Wird nun ein Bild, welches kein Stoppschild 4 enthält, fälschlicherweise als Stoppschild 4 vom Arbeitsmodell erkannt, ist die Wahrscheinlichkeit hoch, dass diese fehlerhafte Klassifikation vom Monotormodell des ersten neuronalen Netzes 1 erkannt wird, wenn die Klassifikation auf Grund eines vorher vom Monitormodell erlernten Aktivierungsmusters 3 als untypisch klassifiziert wird und damit eine Abweichung des Arbeitsmodells von seinen Anforderungen darstellt. Die Fehlermeldung erfolgt durch die Ausgabe 6 des ersten neuronalen Netzes 1. Das Monitormodell lässt sich daher auch bildhaft als "Über-Ich" oder "Gewissen" des Arbeitsmodells beschreiben.

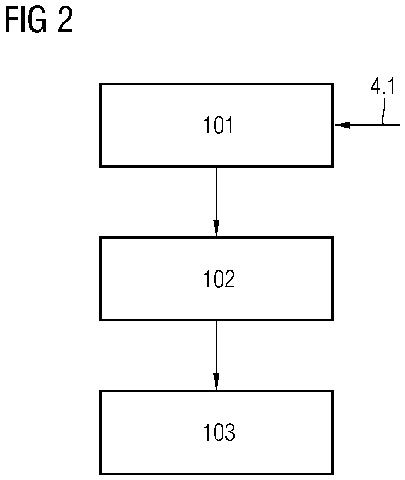

FIG. 2 zeigt ein Ablaufdiagramm eines automatisierten Verfahrens zur Erzeugung eines Monitormodells eines Monitors zur Überwachung eines Arbeitsmodells einer künstlichen Intelligenz, am Beispiel eines ersten neuronalen Netztes 1 als Monitor und eines zweiten neuronalen Netztes 2 als künstliche Intelligenz.

In einem ersten Schritt 101 wird mit Trainingsdaten als Eingabedaten, beispielsweise Bilddaten4.1 eines Objekts, das zweite neuronale Netz 2 trainiert. In einem zweiten Schritt 102 wird eine repräsentative Datenmenge der Trainingsdaten ausgewählt. In einem dritten Schritt 103 wird mit der repräsentativen Datenmenge das zweite neuronale Netz 2 und sein Arbeitsmodell noch einmal durchlaufen und mit der Ausgabe der Aktivierungsfunktionen (= Aktivierungsmuster und/oder Aktivierungspfade) der Neuronen des zweiten neuronalen Netzes 2 das Monitormodell des ersten neuronalen Netzes 1 trainiert. Dadurch wird das Monitormodell in die Lage versetzt, bei Betrieb des Arbeitsmodells das Arbeitsmodell zu überwachen und Fehler zu erkennen.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: erstes neuronales Netz (Monitor)
- 2: zweites neuronales Netz
- 3: Ausgabe der Aktivierungsfunktionen der Neuronen des zweiten neuronalen Netzes 2
- 4: Stoppschild
- 4.1: Menge von Bildpunkten
- 5: Ausgabe zweites neuronales Netz
- 6: Ausgabe erstes neuronales Netz

- 101: erster Schritt: Training des Arbeitsmodells
- 102: zweiter Schritt: Auswahl der repräsentativen Datenmenge
- 103: dritter Schritt: Training des Monitormodells

## Patentansprüche

1. Automatisiertes Verfahren zur Erzeugung eines Monitormodells eines Monitors zur Überwachung eines Arbeitsmodells einer künstlichen Intelligenz,
- wobei durch das Arbeitsmodell eine Klassifizierung von Eingabedaten durchführt wird und
- wobei mit einer repräsentativen Datenmenge des Arbeitsmodells das Monitormodell trainiert wird.

2. Verfahren nach Anspruch 1, wobei der Monitor ein künstliches erstes neuronales Netz (1) aufweist und die repräsentative Datenmenge als Eingabe für das erste neuronale Netz (1) verwendet wird.

3. Verfahren nach einem der vorhergehenden Ansprüche, wobei die künstliche Intelligenz ein künstliches zweites neuronales Netz (2) aufweist, wobei die repräsentative Datenmenge durch die Ausgabe (3) der Aktivierungsfunktionen der Neuronen des zweiten neuronalen Netzes (2) gebildet wird.

4. Verfahren nach Anspruch 3, wobei das Monitormodell dadurch trainiert wird, dass in das mit Trainingsdaten (4.1) fertig trainierte Arbeitsmodell die Trainingsdaten (4.1) oder ein Teil der Trainingsdaten (4.1) abermals zur Analyse eingegeben werden und das Arbeitsmodell durchlaufen wird, wobei das Monitormodell eine Menge der gültigen Aktivierungsmuster und/oder Aktivierungspfade, die das Arbeitsmodell erreichen kann, erlernt.

5. Vorrichtung, aufweisend eine künstliche Intelligenz und einen Monitor zur Überwachung eines Arbeitsmodells der künstlichen Intelligenz,
- wobei die künstliche Intelligenz eingerichtet ist, durch das Arbeitsmodell eine Klassifizierung von Eingabedaten durchzuführen und
- wobei mit einer repräsentativen Datenmenge des Arbeitsmodells ein Monitormodell des Monitors trainiert wird.

6. Vorrichtung nach Anspruch 5, wobei der Monitor ein künstliches erstes neuronales Netz (1) aufweist und die Eingabe für das erste neuronale Netz (1) durch die repräsentative Datenmenge gebildet ist.

7. Vorrichtung nach Anspruch 5 oder 6, wobei die künstliche Intelligenz ein künstliches zweites neuronales Netz (2) aufweist, wobei die repräsentative Datenmenge durch die Ausgabe (3) der Aktivierungsfunktionen der Neuronen des zweiten neuronalen Netzes (2) gebildet ist.

8. Vorrichtung nach Anspruch 7, wobei die Vorrichtung eingerichtet ist, das Monitormodell dadurch zu trainieren, dass in das mit Trainingsdaten (4.1) fertig trainierte Arbeitsmodell die Trainingsdaten (4.1) oder ein Teil der Trainingsdaten (4.1) abermals zur Analyse eingegeben werden und das Arbeitsmodell durchläuft, wobei das Monitormodell eine Menge der gültigen Aktivierungsmuster und/oder Aktivierungspfade, die das Arbeitsmodell erreichen kann, erlernt.

9. Computerprogrammprodukt, umfassend ein Computerprogramm, wobei das Computerprogramm in eine Speichereinrichtung einer Einrichtung ladbar ist, wobei mit dem Computerprogramm die Schritte eines Verfahrens nach einem der Ansprüche 1 bis 4 ausgeführt werden, wenn das Computerprogramm auf der Einrichtung ausgeführt wird.

10. Computerlesbares Medium, auf welchem ein Computerprogramm gespeichert ist, wobei das Computerprogramm in eine Speichereinrichtung einer Einrichtung ladbar ist, wobei mit dem Computerprogramm die Schritte eines Verfahrens nach einem der Ansprüche 1 bis 4 ausgeführt werden, wenn das Computerprogramm auf der Einrichtung ausgeführt wird.
